# EUROPEAN PATENT SPECIFICATION

(11) **EP 2 345 563 B1**
(45) Date of publication and mention of the grant of the patent: **27.06.2012**
(21) Application number: 10150713.5
(22) Date of filing: 14.01.2010
(51) Int. Cl.: B60R 21/34

(54) **Deployable Bonnet System**
Aufklappbares Motorhaubensystem
Système de capot déployable

(43) Date of publication of application: 20.07.2011
(73) Proprietor: Volvo Car Corporation, 405 31 Göteborg (SE)
(72) Inventor: Lindmark, Peter, 42243, Hisings Backa (SE); Landholm, Robert, 45991, Ljungskile (SE)
(74) Representative: Widahl, Jenny Marie

(56) References cited:
- DE-A1- 2 711 338
- DE-A1-102005 007 903

## Description

### TECHNICAL FIELD

The invention relates to a deployable bonnet system for pedestrian protection in the event of collision with a pedestrian. The system comprises a hinge mechanism providing a hinged connection between a bonnet and a body structure of a vehicle, and an actuator adapted to press the bonnet from a first closed position to a second raised position.

### BACKGROUND OF THE INVENTION

If a motor vehicle, such as a car, is involved in an accident in which the front part of the vehicle hits a pedestrian, it is not uncommon that the head of the pedestrian impacts on the bonnet of the vehicle and the pedestrian may be severely injured. The seriousness of the injury results from the fact that although the front or bonnet, which is usually formed from thin metal sheet, would tend to bend, it then strikes parts which are beneath the bonnet and in practice cannot be deformed, such as the engine block. In order to reduce the severity of these accidents, it is well-known to use a deployable bonnet, e.g. by raising the rear part of the bonnet to an "impact position", so that the distance between the bonnet and the hard engine parts is increased.

There are a number of known designs, as described e.g. in GB 2435016 A, wherein the bonnet is displaceable towards an "impact position" by means of multi-link hinges. The hinges hold the bonnet both in the normal closed position and in the "impact position".

It is further known to lift the bonnet to an "impact position" by means of an inflatable member such as an airbag. The inflatable member may be located below the rear side of the bonnet at the centre of the vehicle. It is a problem with such known deployable bonnets that when the bonnet is lifted by the inflatable member, the central rear region of the bonnet is subjected to a force which may cause the bonnet to oscillate or flutter. As a result, the bonnet may deflect, e.g. bulge, or may even swing up and down around its equilibrium in the impact position. As a consequence thereof, there is a risk that the bonnet does not reach the desired impact position within the required time limit before the pedestrian may impact onto the bonnet. If the head of the pedestrian meets an up-going bonnet, extra injuries may result.

Another deployable bonnet system is described in DE 102005007903.

A further drawback with many prior art solutions is that they involve many different parts, which make them heavy and requiring large packaging volume as well as that they are expensive and difficult to put together at the production facility.

As may be realized from the above, there is a need for improvements of the prior art deployable bonnet systems, in particular as regards the prior art construction of the hinge mechanism and its function.

### SUMMARY OF THE INVENTION

The object of the present invention is to overcome or ameliorate at least one of the disadvantages of the prior art, and/or to provide a useful alternative.

This object is achieved by the provision of a deployable bonnet system for pedestrian protection in the event of collision with a pedestrian in which the system comprises a hinge mechanism providing a hinged connection between a bonnet and a body structure of a vehicle and an actuator adapted to press the bonnet from a closed position to a raised position as defined in claim 1. The hinge mechanism comprises a first hinge member connected to the bonnet and a second hinge member pivotally arranged to a body structure member connected to the body structure of the vehicle. The hinge mechanism is adapted to have a first state in which the first and second hinge members are releasably engaged to each other and a second state in which the first and second hinge members are released and pivotally engaged to each other. The hinge mechanism further comprises a spring member which is adapted to be tensioned when the bonnet moves from the closed position to the raised position such that the raising movement of the bonnet is retarded.

Such a deployable bonnet system provides a robust and reliable system that may be designed with few parts, may be made light weight and may be readily installed into a motor vehicle. Further, the present solution may be cheaper than other known systems of today, both due to reduced material costs and to a simplified assembly process.

Further, while the spring member is tensioned as the bonnet is pressed upwards, the spring member also generates a braking force. The braking force of the spring member may dampen any oscillating movements of the bonnet such that the bonnet smoothly reaches the raised position. Thereby, the raising speed of the bonnet is retarded before it reaches the deployed or raised position and it does not stop all of a sudden, since a sudden stop may lead to undesired stresses or deformations of the materials in the deployable bonnet system, bonnet and/or vehicle body. However, the system is designed to be able to withstand a certain amount of stresses, which may contribute to the braking effect.

According to an embodiment of the invention, the raised position is determined by features of the spring member.

The features of the spring member may be decided by the spring comprised in the spring member. By choosing the type of spring and, for example its material, size, thickness etc in relation to bonnet size and weight, the tensioning of the spring may be able to retard the raising movement of the bonnet in a controlled and desired way. In this way, the positioning of the bonnet in the raised position may be controlled by the spring member.

According to another embodiment of the invention, the spring member is adapted to force the bonnet from the raised position in a direction back towards the closed position when the actuator is deactivated.

By forcing the bonnet downwards by means of spring tension forces as the actuator is deactivated, it is prevented that the bonnet obstructs the view through the windscreen. Thus, the spring member automatically brings the bonnet down to improve the field of vision. Even if the bonnet at its highest position in the raised position does not cover or block the windscreen completely, the visibility out through the windscreen may be impaired. Therefore, it is an advantage that the bonnet is lowered, i.e. forced back towards the closed position as soon as the actuator is deactivated. In this way, the bonnet is removed out of sight for the driver and the vehicle may safely be taken to the side of the road or to a repairs station.

According to a further embodiment of the invention, the spring member is arranged between the first and second hinge members.

This arrangement contributes to make the hinge mechanism size efficient and may provide the system with a low packaging volume.

According to an embodiment of the invention, the spring member is locked between the first and second hinge members when the hinge mechanism is adapted to be in the first state.

When the hinge mechanism is in its first state, the bonnet may be opened to a normal open position to gain access to the engine compartment. An advantage with the present hinge mechanism is that it also functions well in the normal opening of the bonnet due to the fact that it comprises few parts such that no extra hinge-legs, cables or the like may disturb the normal opening and closing of the bonnet. Preferably, the hinges of the bonnet are located at the region of the bonnet located towards the windscreen of the vehicle. When opening such a bonnet to get access to the engine compartment, the front end of the bonnet is lifted. Alternatively, the hinges could be at the front end, and the bonnet would in that case be opened by lifting the rear end. Nevertheless, in case of a pedestrian collision, the rear end is raised.

According to another embodiment of the invention, the first and second hinge members are releasably engaged by means of an engaging means holding the first and second hinge members together in the first state of the hinge mechanism.

As the hinge members are releasably connected the hinge mechanism may adopt two states for movement. In this way the same hinge mechanism can be used for normal opening of the bonnet as well as for the deployable bonnet system opening at the rear end of the bonnet. It is an advantage with the hinge mechanism of the deployable bonnet system of the present invention that it consists of few parts. This is an advantage as it makes the hinge mechanism both light weight and easy to put together. Further, this construction may save both costs and packaging volume.

According to a further embodiment of the invention, the engaging means may be a shear screw which is adapted to break as the bonnet is pressed in a direction upwards to the raised position.

After actuation of the deployable bonnet system the engaging means, i.e. the shear screw may easily be replaced in a workshop or the like. Accordingly, there is no need to exchange the whole hinge mechanism after actuation of the system but the shear screw only. Further, the engaging means may also be any other suitable means for releasably connecting two members. For example, the engaging means may be a pyrotechnical means.

According to an embodiment of the invention, the spring member comprises a blade spring which is adapted to be arranged between said first and second hinge members.

A blade spring is generally shaped as a flat, elongated piece of material. Thus, the blade spring may easily be arranged on the first and second hinge members respectively. Further, in this way the blade spring is arranged to take up forces created by the movements of the first and second hinge members relative to each other.

According to another embodiment of the invention, the blade spring is engaged with a bushing of said shear screw, the bushing being located on the first hinge member.

On the first hinge member, the blade spring may be engaged with one of its ends around the circumference of the bushing. It is an advantage that the parts of the hinge mechanism may be easily and straightforward assembled to each other.

According to a further embodiment of the invention, the spring member further comprises a spring screw attached to said second hinge member wherein said blade spring is engaged with said spring screw.

On the second hinge member, the blade spring may be engaged with its other end around the circumference of the spring screw.

According to an embodiment of the invention, the first hinge member is provided with a slot, which is adapted to receive the spring screw attached on the second hinge member when said hinge mechanism is in the first state.

The provision of the slot makes it possible for the first and second hinge member to take a position parallel to each other although the spring member is located in between the first and second hinge members. In this way a compact construction of the hinge member may be obtained.

According to a further embodiment of the invention, the first hinge member is movable around a pivot screw as the hinge mechanism is in the second state.

According to a still further embodiment of the invention, the bonnet is adapted to be brought all the way back to the closed position by applying a pressing force to the rear end of the bonnet.

The bonnet may already have been lowered automatically a certain distance towards the closed position due to the spring force acting on the bonnet. However, it is an advantage that there is a possibility to manually move the bonnet all the way back to the closed position and having it staying there while the vehicle is carefully taken to a workshop or the like.

According to another embodiment of the invention, the actuator is an inflatable member, such as a pedestrian airbag, a pyrotechnical device, a mechanical spring, a compressed-air piston, an electrical lifter, a rack or a lifting arm.

It should preferably be able to raise the bonnet in a few milliseconds. The inflatable member may be an airbag. One or more airbags may be used located beneath the bonnet. Alternatively a wide air bag container may be used.

A further aspect of the invention relates to a motor vehicle provided with a deployable bonnet system in accordance with claims 1-14.

### BRIEF DESCRIPTION OF THE DRAWINGS

The present invention will hereinafter be further explained by means of non-limiting examples with reference to the appended figures wherein:
- Figure 1: is a schematic side view of a front portion of a vehicle with a deployable bonnet system in accordance with the invention and illustrating the bonnet in a first closed position and in a normal open position,
- Figure 2: is a schematic side view of a front portion of a vehicle with a deployable bonnet system in accordance with the invention and illustrating the bonnet in a first closed position and in a second raised position,
- Figures 3a-3b: show a perspective top view of a hinge mechanism of the deployable bonnet system according to the invention when the hinge mechanism is in a first state and in a second state respectively,
- Figure 4a: shows a side view of the hinge mechanism of the deployable bonnet system according to the invention when the bonnet is in a closed position,
- Figure 4b: illustrates a cross section of the hinge mechanism shown in Fig. 4a,
- Figure 5: shows a side view of the hinge mechanism of the deployable bonnet system according to the invention when the bonnet is in a normal opening position, and
- Figure 6: illustrates an outer side view of the hinge mechanism of the deployable bonnet system according to the invention when the bonnet is in a raised position.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. The words front and rear used below relates to the motor vehicle, where front is the part coming first in the normal forward driving direction.

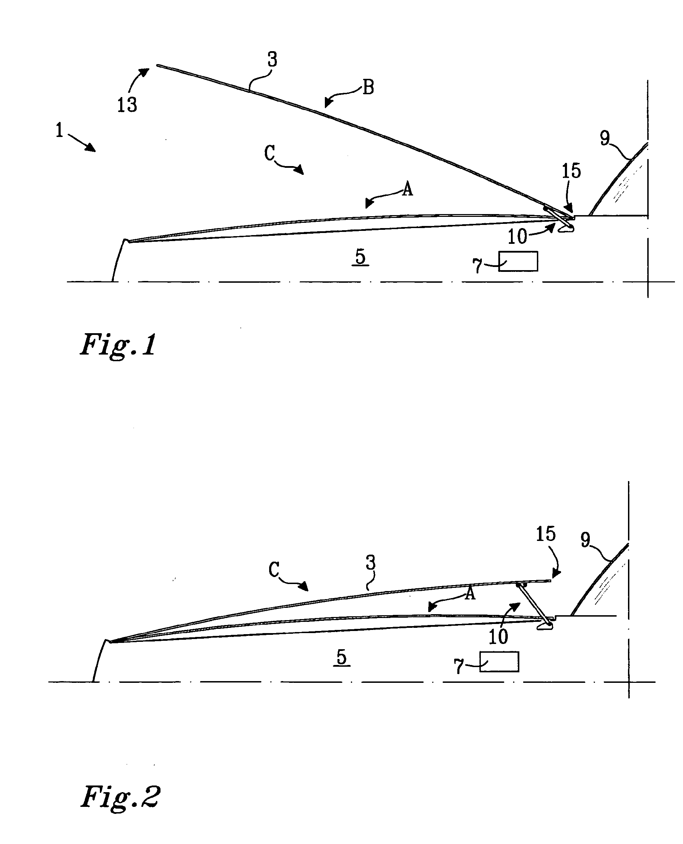

Figure 1 is a schematic side view of the front end of a motor vehicle 1, here a car. The bonnet 3 covers the engine compartment 5 of the vehicle and allows access to the engine compartment 5 for maintenance and repair. The bonnet 3 is connected to the vehicle 1 by a hinge mechanism 10, one at each side of the bonnet 3. The rear end 15 of the bonnet 3 is directed towards the windscreen 9 of the vehicle 1. Normally the bonnet 3 is in a closed position A covering the engine compartment 5. The closed position A is herein below also sometimes referred to as a first position A. The bonnet 3 can be lifted to an open position B allowing normal access to the engine compartment 5. The vehicle 1 then normally stands still. The illustrated example shows a bonnet 3 which is opened at its front end 13, but the bonnet 3 may also be opened at its rear end 15, and in that case the hinge mechanism 10 would be at the front end 13. The bonnet 3 is connected to an actuator 7 which is only schematically illustrated and which is positioned somewhere in the vehicle construction, generally beneath the bonnet 3. The actuator 7 is being arranged to raise the bonnet 3 at its rear end 15 to a deployed or raised position after sensor input that the vehicle 1 is about to hit a pedestrian. It should be realized that the actuator 7 also may be activated by for example an animal running out in front of the vehicle 1, the animal having a sufficient size as to hit the bumper of the vehicle and to activate the sensors that are connected to the actuator 7. Although the sensor system will be programmed to sense the difference between a pedestrian and an animal, it cannot be excluded that the sensors sometimes would mistake an animal for a pedestrian. Normally, one or more sensors (not shown) are used to detect a collision with a pedestrian, e.g. that the bumper hits the legs of the pedestrian. In case of a collision, the actuator 7 is activated.

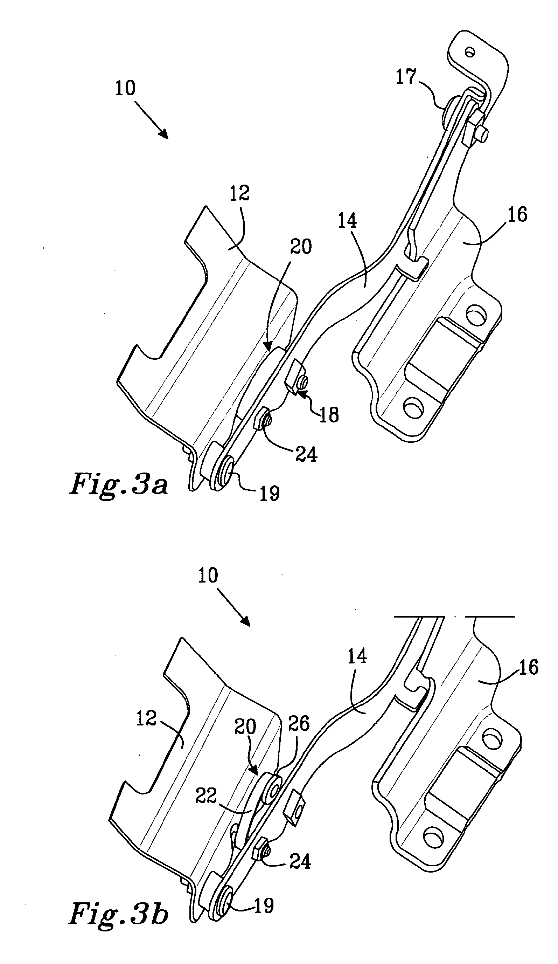

Figure 2 is a schematic side view of a vehicle showing the bonnet 3 in a raised or deployed position C. The first position A is also shown. In case of a collision with a pedestrian or the like, e.g. a bumper hitting the legs of a pedestrian, which collision e.g. may be sensed by a sensor (not shown), the bonnet 3 is raised to a deployed or raised position C. As the actuator 7 raises the bonnet 3, a distance is formed between the bonnet 3 and the hard parts of the engine, allowing deflection of the bonnet 3 without the risk of the head of the pedestrian hitting hard parts of the engine. The bonnet 3 may be raised at both ends, but normally the rear end 15 is raised to a higher position. The distance formed between the bonnet 3 and the hard parts of the engine is about 90 to 130 mm, and preferably between 100 to 120 mm. To be able to raise the bonnet 3 to the raised position C the hinge mechanism 10 needs to move in a different way in relation to how it moves when the bonnet 3 is opened to a normal opening positioning B. Therefore, the hinge mechanism 10 is adapted to have a first and a second state for movement. In the first state the hinge mechanism is adapted to move from a closed position A of the bonnet 3 to a normal opening position B of the bonnet, and vise versa. In the second state the hinge mechanism is adapted to move between a closed position A of the bonnet to a raised position C of the bonnet, and preferably also back in a direction towards position A. It should be noted that the hinge mechanism 10 showed in Figs 1 and 2 is not drawn to scale. The details of the hinge mechanism 10 will be described in more detail with reference to Figures 3 to 6.

In Figure 3a a perspective view of the hinge mechanism 10 of the deployable bonnet system in accordance with the invention is shown when the bonnet 3, to which the hinge mechanism 10 is arranged, is in the first closed position A. The hinge mechanism 10 is here adapted to move between position A and position B, which is the normal opening position. The hinge mechanism 10 comprises a first hinge member 12 and a second hinge member 14. The first hinge member 12 is a piece of material that is fixedly attached to the bonnet 3 by any suitable fastening means, for example by screwing or by welding. The second hinge member 14 is a hinge arm that is pivotally connected to the first hinge member 12 via a pivot screw 19.

However, in the position shown in Fig. 3a, i.e. the hinge mechanism 10 being in the first state, the first hinge member 12 and the second hinge member 14 are releasably engaged to each other by engaging means 18. The engaging means 18 is adapted to keep the first and second hinge member together in the first state of the hinge mechanism 10. The engaging means 18 is adapted to release the first hinge member 12 from the second hinge member 14 upon activation from the actuator 7. Accordingly, when the bonnet 3 is moved upwards the engaging means 18 is released and the first hinge member 12 can move relative to the second hinge member 14. The second hinge member 14 is further pivotally connected to the body structure member 16 via a pivot screw 17. The body structure member 16 is adapted to be fixedly attached to the body structure of the vehicle by any suitable fastening means, for example by screwing or by welding. The hinge mechanism 10 further comprises a spring member 20 arranged between the first and second hinge members. When the bonnet 3 is in the first position A, the spring member 20 is locked or secured in between the first and second hinge members 12, 14. The spring member 20 comprises a spring 22, preferably a blade spring. The spring member 20 further comprises a spring screw 24 to which one end of the spring is attached. The spring screw 24 is attached to the second hinge member 14. The other end of the blade spring is arranged around a part of the engaging means 18. In the Figure 3a shown position A of the bonnet 3, the spring 22 is in a neutral position, i.e. no tensions are applied to the spring.

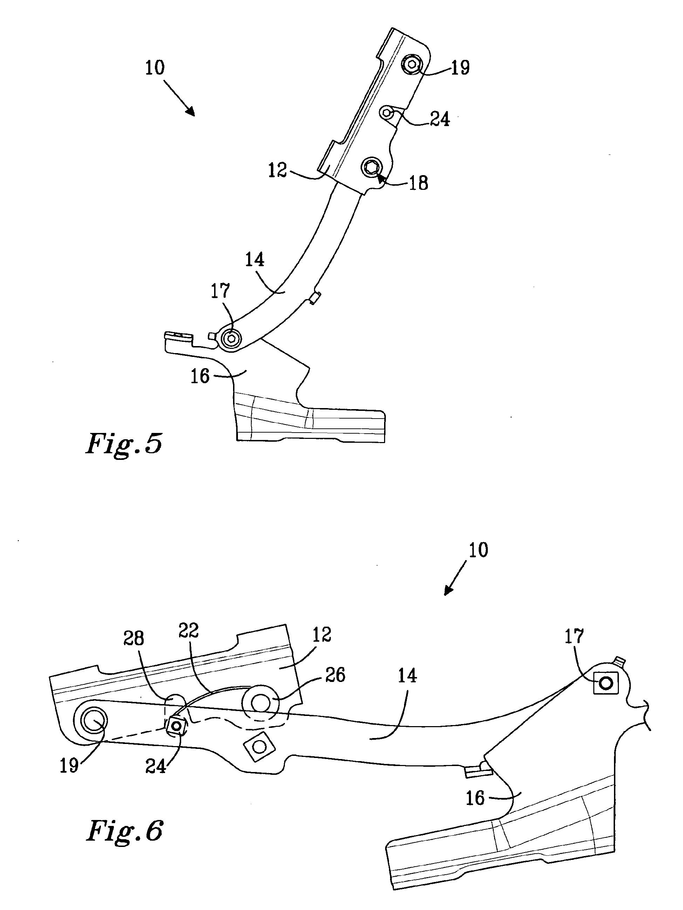

In Figure 3b a perspective view of the hinge mechanism 10 of the deployable bonnet system in accordance with the invention is shown when the hinge mechanism 10 is in the second state, when the bonnet 3 has been moved to the raised position C. In the event that a pedestrian is hit and the actuator 7 is activated, the rear end 15 of the bonnet 3 will be pressed upwards. When the bonnet 3 is moved in an upward direction the engaging means 18 will be released and the first hinge member 12 and the second hinge member 14 are now released from each other. Accordingly, the first and second hinge members 12, 14 may now move relative to each other around a pivot point defined by the pivot screw 19. The movement of the first and second hinge members relative each other will influence the spring member 20 and thus the blade spring 22. The movement of the first hinge member 12 relative to the second hinge member 14 will subject the blade spring 22 for compression forces and/or tensile forces. This will be described in more detail in relation to Figure 6.

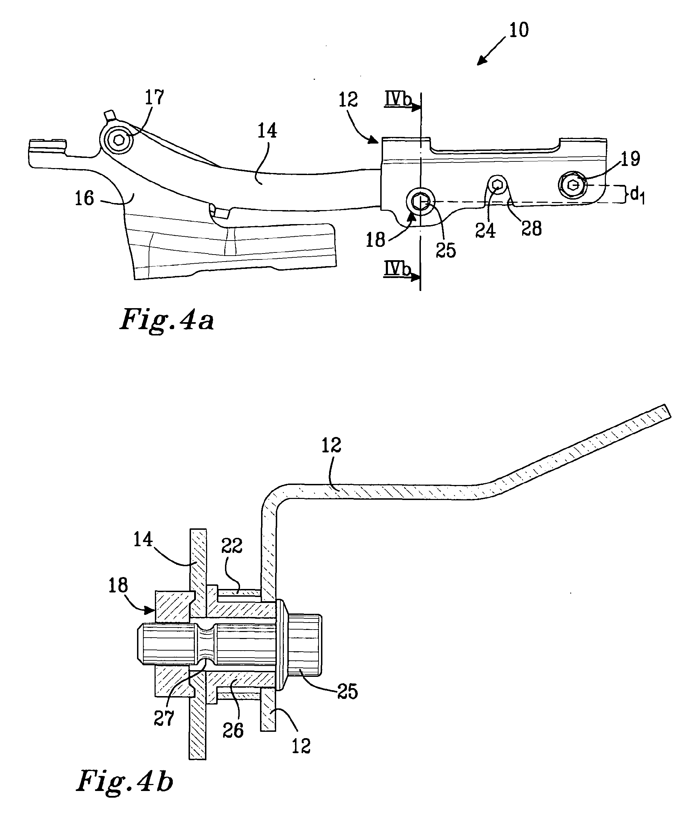

Figure 4a shows the hinge mechanism 10 in a side view in the first state, as also shown in Fig. 3a, and the bonnet 3 connected to the hinge mechanism 10 is in a closed position. However, in Figure 4a it can be seen that the pivot screw 19 connecting the first and second hinge members 12, 14 is located at a slightly elevated position in relation to the positioning of the engagement means 18. The engagement means 18 is located a distance d₁ beneath the location of the pivot screw 19. As mentioned in connection with Figure 3a, the spring 22 of the spring member 20 is in a neutral position, which means there are no spring forces acting on any of the engagement points of the spring 22. A slot 28 is provided in the first hinge member 12 for receiving the spring screw 24 such that the first and second hinge member 12, 14 may be arranged in parallel to each other.

Figure 4b is a cross-sectional view of the hinge mechanism 10 as shown in Figure 4a. The first and second hinge members 12, 14 are engaged with each other by engaging means 18. In the shown embodiment the engaging means 18 comprises a shear screw 25 and a bushing 26. The shear screw 25 has a weakened portion 27 which will initiate the break of the shear screw 25 when the actuator 7 is activated. The shear screw bushing 26 is attached to the first hinge member 12. The blade spring 22 is engaged with or around the bushing 26. In case the actuator 7 is activated and the bonnet 3 pressed upwards, the shear screw 25 will break in the weakened portion 27. The first and second hinge members 12, 14 are released from each other. The first hinge member 12 will move around a pivot point defined by the pivot screw 19 and together with the pressing force from the activator 7 the first hinge member 12 will make it possible that the rear end 15 of the bonnet 3 is raised to the position C.

In a normal operation of the bonnet 3 as is shown in Figure 5, for example in order to access the engine compartment 5, the hinge mechanism 10 will open the bonnet 3 to a normal opening position B. The second hinge member 14 move in relation to the body structure member 16 around the pivot screw 17. Hence, the hinge mechanism 10 is in its first state. As mentioned above, in the first state of the hinge mechanism 10 the first hinge member 12 is releasbly engaged with the second hinge member 14 by means of the engaging means 18. When the hinge mechanism 10 is working in normal use such as illustrated in Figure 5, there are no parts or accessories related to a deployable bonnet system disturbing the normal opening and closing of the bonnet 3.

Figure 6 illustrates an (outer) side view of the hinge mechanism 10 in the second state, thus when the bonnet 3 is in a raised position. The second hinge member 14 is made slightly transparent for illustrative purpose only. As has been previously described, the actuator 7 forces the bonnet 3 upwards after it has been actuated. When the bonnet 3 is pressed upwards the engaging means 18 is removed and the rear end 15 of the bonnet is raised as the first hinge member 12 now is released from the second hinge member 14. During the movement of the first hinge member 12, the blade spring 22 is subjected first to a pressing force up to the level of the spring screw 24, which is the distance d₁. Then secondly, it is subjected to a tensile force tensioning the blade spring 22. The blade spring 22 is now tensioned while the bonnet 3 is still moving in an upward direction under the pressing force from the actuator. While the blade spring 22 is tensioned it is at the same time generating a braking force. The braking force retards and restricts the upward movement of the bonnet 3. The braking force from the blade spring 22 influences the bonnet 3 in such a way that any oscillating movement of the bonnet 3 is prevented. As the blade spring generates a braking force, the bonnet positions in the position C in a controlled manner. The bonnet is positioned in the raised position C at a given spring tension limit value of the blade spring 22.

Further, as the actuator 7 is inactivated after approximately 2 seconds of activation, there is no longer any upwardly directed force acting on the bonnet 3. Instead, there is a spring force from the tensioned blade spring 22 acting on the hinge mechanism 10. The spring member 20 will act on the fist hinge member 12 and the bonnet 3 will be moved in a direction back towards the closed position A. The bonnet 3 will normally not be drawn all the way back to the closed position A. The bonnet 3 will be drawn back towards the closed position a distance which provides a sufficient sight for the driver out through the windscreen such that the driver may safely take the vehicle to the side of the road or the like. The bonnet 3 will be drawn in a downwards direction approximately 20-40% of the raised distance, preferably around 30% of the raised distance. It should be noted that this figure may vary slightly from one car model to another. It is an advantage of the present invention that a feature, being the spring member 20, is incorporated with the hinge mechanism 10 for making the bonnet 3 automatically at least partially move back towards the closed position A. The provision of the spring member 20 contributes to make the system very compact and space efficient. From a safety perspective, it is also an advantage that the bonnet 3 automatically is at least partially moved back towards the closed position A as the time frame with an impaired sight through the windscreen could be minimized.

By applying a pressing force to the rear end 15 of the bonnet it is possible to push the bonnet 3 further down. In fact, the bonnet 3 may be pressed back to the first position A. This may be carried out by manually pressing the bonnet 3 down by hand. The hinge mechanism 10 will stay in the first position A even though the engaging means 18 is not in place. The reason for this is that by applying a pressing force to the bonnet 3, the blade spring 22 of the spring member 20 will return to its neutral position where no forces are exerted on the first and second hinge members 12, 14. The vehicle can be safely taken to a repairs station by its own powers to have the engagement means 18 replaced.

Further modifications of the invention within the scope of the protection sought may be realized by a person skilled in the art. For example, the outer shape and/or size of parts making up the hinge mechanism may differ from what has been described in the exemplified embodiments to fit in different motor vehicle models. It should be noted that a further mechanical stop member may be arranged in vicinity of the hinge mechanism or the bonnet to position the bonnet in the raised position. Therefore, it is to be understood that the foregoing is illustrative of various example embodiments and is not to be limited to the specific embodiments disclosed and that modifications to the disclosed embodiments, combinations of features of disclosed embodiments as well as other embodiments are intended to be included within the scope of the appended claims.

## Claims

1. A deployable bonnet system for pedestrian protection in the event of collision with a pedestrian, the system comprising
- a hinge mechanism (10) providing a hinged connection between a bonnet (3) and a body structure of a vehicle (1), and
- an actuator (7) adapted to press said bonnet (3) from a closed position (A) to a raised position (C), wherein said hinge mechanism (10) comprising
- a first hinge member (12) connected to said bonnet (3),
- a second hinge member (14) pivotally arranged to a body structure member (16) connected to said body structure of the vehicle,
- said hinge mechanism (10) is adapted to have a first state in which said first and second hinge members (12, 14) are releasably engaged to each other and a second state in which said first and second hinge members (12, 14) are released and pivotally engaged to each other,
said hinge mechanism (10) further comprising a spring member (20) which is adapted to be tensioned when said bonnet (3) moves from said closed position (A) to said raised position (C) such that the raising movement of said bonnet (3) is retarded,
**characterized in that**
said first and second hinge members (12, 14) are releasably engaged by means of an engaging means (18) holding said first and second hinge members together in said first state of the hinge mechanism (10).

2. A deployable bonnet system according to claim 1, wherein said raised position (C) is determined by features of said spring member (20).

3. A deployable bonnet system according to claim 1 or 2, wherein said spring member (20) is adapted to force said bonnet (3) from said raised position (C) in a direction back towards said closed position (A) when said actuator (7) is deactivated.

4. A deployable bonnet system according to any of claims 1 to 3, wherein said spring member (20) is arranged between said first and second hinge members (12, 14).

5. A deployable bonnet system according to any of claims 1 to 4, wherein said spring member (20) is locked between said first and second hinge members (12, 14) when the hinge mechanism (10) is adapted to be in said first state.

6. A deployable bonnet system according to any of the preceding claims, wherein said engaging means (18) is a shear screw (25) which is adapted to break as the bonnet (3) is pressed in a direction upwards to the raised position (C).

7. A deployable bonnet system according to any of the preceding claims, wherein said spring member (20) comprises a blade spring (22) which is adapted to be arranged between said first and second hinge members (12, 14).

8. A deployable bonnet system according to claim 7, wherein said blade spring (22) is engaged with a bushing (26) of said shear screw (25), said bushing (26) being located on the first hinge member (12).

9. A deployable bonnet system according to any of the preceding claims, wherein said spring member (20) further comprises a spring screw (24) attached to said second hinge member (14) wherein said blade spring (22) is engaged with said spring screw (24).

10. A deployable bonnet system according to claim 9, wherein said first hinge member (12) is provided with a slot (28), said slot (28) is adapted to receive said spring screw (24) attached on said second hinge member (14) when said hinge mechanism (10) is in said first state.

11. A deployable bonnet system according to any of the preceding claims, wherein said first hinge member (12) is movable around a pivot screw (17) when said hinge mechanism (10) is in said second state.

12. A deployable bonnet system according claim 11, wherein said bonnet (3) is adapted to be brought all the way back to said closed position (A) by applying a pressing force to said rear end (15) of said bonnet (3).

13. A deployable bonnet system according to any of the preceding claims, wherein said actuator (7) is an inflatable member, such as a pedestrian airbag, a pyrotechnical device, a mechanical spring, a compressed-air piston, an electrical lifter, a rack or a lifting arm.

14. A motor vehicle provided with a deployable bonnet system in accordance with claims 1-13.

## Patentansprüche

1. Aufklappbares Motorhaubensystem zum Fußgängerschutz bei einem Zusammenprall mit einem Fußgänger, wobei das System Folgendes umfasst:
- einen Scharniermechanismus (10), der eine Scharnierverbindung zwischen einer Motorhaube (3) und einer Karosseriestruktur eines Fahrzeugs (1) bereitstellt, und
- ein Stellglied (7), das dazu geeignet ist, die Motorhaube (3) aus einer geschlossenen Position (A) in eine angehobene Position (C) zu drücken, wobei der Scharniermechanismus (10) Folgendes umfasst:
- ein erstes Scharnierelement (12), das mit der Motorhaube (3) verbunden ist,
- ein zweites Scharnierelement (14), das schwenkbar an einem Karosseriestrukturelement (16) angeordnet ist, das mit der Karosseriestruktur des Fahrzeugs verbunden ist,
- wobei der Scharniermechanismus (10) dazu geeignet ist, einen ersten Zustand, in dem das erste und das zweite Scharnierelement (12, 14) freigebbar miteinander in Eingriff stehen, und einen zweiten Zustand, in dem das erste und das zweite Scharnierelement (12, 14) freigegeben sind und schwenkbar miteinander in Eingriff stehen, einzunehmen,
wobei der Scharniermechanismus (10) ferner ein Federelement (20) umfasst, das dazu geeignet ist, gespannt zu werden, wenn sich die Motorhaube (3) aus der geschlossenen Position (A) in die angehobene Position (C) bewegt, so dass die Anhebebewegung der Motorhaube (3) verzögert ist,
**dadurch gekennzeichnet, dass**
das erste und das zweite Scharnierelement (12, 14) durch ein Eingriffsmittel (18) freigebbar in Eingriff stehen, das das erste und das zweite Scharnierelement im ersten Zustand des Scharniermechanismus (10) zusammenhält.

2. Aufklappbares Motorhaubensystem nach Anspruch 1, wobei die angehobene Position (C) durch Merkmale des Federelements (20) bestimmt ist.

3. Aufklappbares Motorhaubensystem nach Anspruch 1 oder 2, wobei das Federelement (20) dazu geeignet ist, die Motorhaube (3) aus der angehobenen Position (C) in eine Richtung zurück zur geschlossenen Position (A) zu zwingen, wenn das Stellglied (7) deaktiviert ist.

4. Aufklappbares Motorhaubensystem nach einem der Ansprüche 1 bis 3, wobei das Federelement (20) zwischen dem ersten und dem zweiten Scharnierelement (12, 14) angeordnet ist.

5. Aufklappbares Motorhaubensystem nach einem der Ansprüche 1 bis 4, wobei das Federelement (20) zwischen dem ersten und dem zweiten Scharnierelement (12, 14) verriegelt ist, wenn der Scharniermechanismus (10) dazu geeignet ist, im ersten Zustand zu sein.

6. Aufklappbares Motorhaubensystem nach einem der vorhergehenden Ansprüche, wobei das Eingriffsmittel (18) eine Abscherschraube (25) ist, die dazu geeignet ist, zu brechen, wenn die Motorhaube (3) in eine nach oben gehende Richtung zur angehobenen Position (C) gedrückt wird.

7. Aufklappbares Motorhaubensystem nach einem der vorhergehenden Ansprüche, wobei das Federelement (20) eine Blattfeder (22) umfasst, die dazu geeignet ist, zwischen dem ersten und dem zweiten Scharnierelement (12, 14) angeordnet zu sein.

8. Aufklappbares Motorhaubensystem nach Anspruch 7, wobei die Blattfeder (22) mit einer Muffe (26) der Abscherschraube (25) in Eingriff steht, wobei die Muffe (26) am ersten Scharnierelement (12) angeordnet ist.

9. Aufklappbares Motorhaubensystem nach einem der vorhergehenden Ansprüche, wobei das Federelement (20) ferner eine am zweiten Scharnierelement (14) angebrachte Federschraube (24) umfasst, wobei die Blattfeder (22) mit der Federschraube (24) in Eingriff steht.

10. Aufklappbares Motorhaubensystem nach Anspruch 9, wobei das erste Scharnierelement (12) mit einem Schlitz (28) versehen ist, der dazu geeignet ist, die am zweiten Scharnierelement (14) angebrachte Federschraube (24) aufzunehmen, wenn der Scharniermechanismus (10) im ersten Zustand ist.

11. Aufklappbares Motorhaubensystem nach einem der vorhergehenden Ansprüche, wobei das erste Scharnierelement (12) um eine Gelenkschraube (17) herum beweglich ist, wenn der Scharniermechanismus (10) im zweiten Zustand ist.

12. Aufklappbares Motorhaubensystem nach Anspruch 11, wobei die Motorhaube (3) dazu geeignet ist, ganz zur geschlossenen Position (A) zurück gebracht zu werden, indem das hintere Ende (15) der Motorhaube (3) mit einer Druckkraft beaufschlagt wird.

13. Aufklappbares Motorhaubensystem nach einem der vorhergehenden Ansprüche, wobei das Stellglied (7) ein aufblasbares Element wie ein Fußgänger-Airbag, eine pyrotechnische Vorrichtung, eine mechanische Feder, ein Druckluftkolben, ein elektrischer Heber, eine Zahnstange oder ein Hebearm ist.

14. Kraftfahrzeug, das mit einem aufklappbaren Motorhaubensystem nach Ansprüchen 1 - 13 versehen ist.

## Revendications

1. Système de capot déployable pour la protection des piétons en cas de collision avec un piéton, le système comprenant
- un mécanisme d'articulation (10) assurant une liaison articulée entre un capot (3) et une structure de carrosserie d'un véhicule (1), et
- un actionneur (7) conçu pour presser ledit capot (3) d'une position fermée (A) à une position relevée (C), ledit mécanisme d'articulation (10) comprenant
- un premier élément d'articulation (12) relié audit capot (3),
- un deuxième élément d'articulation (14) disposé de manière pivotante sur un élément de structure de carrosserie (16) relié à ladite structure de carrosserie du véhicule,
ledit mécanisme d'articulation (10) étant conçu pour avoir un premier état, dans lequel lesdits premier et deuxième éléments d'articulation (12, 14) sont engagés l'un avec l'autre de manière libérable, et un deuxième état, dans lequel lesdits premier et deuxième éléments d'articulation (12, 14) sont libérés et engagés l'un avec l'autre de manière pivotante,
ledit mécanisme d'articulation (10) comprenant en outre un élément de ressort (20) qui est conçu pour être tendu lorsque ledit capot (3) se déplace de ladite position fermée (A) jusqu'à ladite position relevée (C) de telle sorte que le mouvement de soulèvement dudit capot (3) soit retardé,
**caractérisé en ce que**
lesdits premier et deuxième éléments d'articulation (12, 14) sont engagés de manière libérable au moyen d'un moyen d'engagement (18) maintenant ensemble lesdits premier et deuxième éléments d'articulation dans ledit premier état du mécanisme d'articulation (10).

2. Système de capot déployable selon la revendication 1, dans lequel ladite position relevée (C) est déterminée par des caractéristiques dudit élément de ressort (20).

3. Système de capot déployable selon la revendication 1 ou 2, dans lequel ledit élément de ressort (20) est conçu pour forcer ledit capot (3) à revenir de ladite position relevée (C) dans une direction vers ladite position fermée (A) lorsque ledit actionneur (7) est désactivé.

4. Système de capot déployable selon l'une quelconque des revendications 1 à 3, dans lequel ledit élément de ressort (20) est disposé entre lesdits premier et deuxième éléments d'articulation (12, 14).

5. Système de capot déployable selon l'une quelconque des revendications 1 à 4, dans lequel ledit élément de ressort (20) est bloqué entre lesdits premier et deuxième éléments d'articulation (12, 14) lorsque le mécanisme d'articulation (10) est conçu pour être dans ledit premier état.

6. Système de capot déployable selon l'une quelconque des revendications précédentes, dans lequel ledit moyen d'engagement (18) est une vis de cisaillement (25) qui est conçue pour se rompre lorsque le capot (3) est pressé dans une direction vers le haut jusqu'à la position relevée (C).

7. Système de capot déployable selon l'une quelconque des revendications précédentes, dans lequel ledit élément de ressort (20) comprend un ressort à lame (22) qui est conçu pour être disposé entre lesdits premier et deuxième éléments d'articulation (12, 14).

8. Système de capot déployable selon la revendication 7, dans lequel ledit ressort à lame (22) est engagé avec une douille (26) de ladite vis de cisaillement (25), ladite douille (26) étant située sur le premier élément d'articulation (12).

9. Système de capot déployable selon l'une quelconque des revendications précédentes, dans lequel ledit élément de ressort (20) comprend en outre une vis à ressort (24) fixée audit deuxième élément d'articulation (14), et dans lequel ledit ressort à lame (22) est engagé avec ladite vis à ressort (24).

10. Système de capot déployable selon la revendication 9, dans lequel ledit premier élément d'articulation (12) est pourvu d'une fente (28), ladite fente (28) étant conçue pour recevoir ladite vis à ressort (24) fixée sur ledit deuxième élément d'articulation (14) lorsque ledit mécanisme d'articulation (10) est dans ledit premier état.

11. Système de capot déployable selon l'une quelconque des revendications précédentes, dans lequel ledit premier élément d'articulation (12) est mobile autour d'une vis de pivot (17) lorsque ledit mécanisme d'articulation (10) est dans ledit deuxième état.

12. Système de capot déployable selon la revendication 11, dans lequel ledit capot (3) est conçu pour être ramené complètement en arrière jusqu'à ladite position fermée (A) en appliquant une force de pression à ladite extrémité arrière (15) dudit capot (3).

13. Système de capot déployable selon l'une quelconque des revendications précédentes, dans lequel ledit actionneur (7) est un élément gonflable, tel qu'un coussin gonflable de sécurité pour piéton, un dispositif pyrotechnique, un ressort mécanique, un piston à air comprimé, un dispositif de levage électrique, une crémaillère ou un bras de levage.

14. Véhicule à moteur pourvu d'un système de capot déployable selon les revendications 1 à 13.
